(19) Europäisches Patentamt
European Patent Office
Office européen des brevets

(11) **EP 2 768 189 A2**

(12) **EUROPEAN PATENT APPLICATION**

(43) Date of publication:
20.08.2014 Bulletin 2014/34

(51) Int Cl.:
*H04L 25/02* (2006.01)    *H04B 7/04* (2006.01)
*H04L 27/26* (2006.01)

(21) Application number: 13163952.8

(22) Date of filing: 16.04.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 15.02.2013 EP 13155402

(71) Applicant: Rohde & Schwarz GmbH & Co. KG
81671 München (DE)

(72) Inventor: Weikert, Oomke, Dr.
81827 Munich (DE)

(74) Representative: Körfer, Thomas
Mitscherlich PartmbB
Patent- und Rechtsanwälte
Sonnenstrasse 33
80331 München (DE)

(54) **Measuring device and measuring method for joint estimation of parameters**

(57) A measuring device (1) for determining at least a first parameter and a second parameter of a measuring signal, comprises receiving means (10) for receiving the measuring signal and processing means (11, 13). The measuring signal comprises a first signal and a second signal. The processing means (11, 13) comprise parameter setting means for setting an initial value of the first parameter and iteration means for iteratively determining the parameters based upon the set initial value of the first parameter.

Fig. 3

**Description**

The present invention relates to a measuring device and a measuring method for determining parameters of a measuring signal, especially carrier frequency error, sample frequency error, phase noise, IQ offset and channel estimation iteratively.

In LTE Advanced UL MIMO the pilot symbols on a subcarrier $k$ and OFDM symbol $l$ are not transmitted exclusively by one layer. If the pilots are transmitted exclusively, like in LTE Advanced DL or Mobile WiMAX, the estimation of carrier frequency offset and sampling frequency offset can be based on correlating two pilot symbols at different OFDM symbols. In addition the estimation of carrier frequency offset and sample frequency offset can be performed separately from IQ offset and channel estimation. In LTE Advanced UL, the pilot symbols on a subcarrier $k$ and OFDM symbol $l$ are transmitted by all layers simultaneously. As the received symbol consists of the sum of all transmitted pilot symbols, the carrier frequency offset and sampling frequency offset estimation approaches used for SISO seems not applicable anymore.

For example the German patent application DE 10 2011 077 390 A1 shows a spectrum analyzer for analyzing mobile communication signals, for example LTE signals. The spectrum analyzer though is disadvantageous, since it is not possible to discern between UL MIMO-Signals, which transmit their pilot symbols simultaneously.

A method and device for determining the channel impulse response of OFDM signals is known from WO 2008/116534 A1.

Accordingly, the object of the present invention is to provide a measuring device, a measuring system and a measuring method, which are able to accurately measure parameters of a measuring signal comprising at least two signals, which include simultaneous pilot signals.

The object is solved by the features of claim 1 for the measuring device, claim 8 for the measuring system and claim 9 for the measuring method. The dependent claims contain further developments and a computer program product and computer program.

The inventive measuring device for determining at least a first parameter and a second parameter of a measuring signal, comprises receiving means for receiving the measuring signal and processing means. The measuring signal comprises a first signal and a second signal. The processing means comprise parameter setting means for setting an initial value of the first parameter and iteration means for iteratively determining the parameters based upon the set initial value of the first parameter. It is therefore possible to determine the parameters even in presence of a first and second signal within the measuring signal.

The iteration means are advantageously set up for determining an intermediate value of the second parameter from the set first parameter in a first iteration, determining an intermediate value of the first parameter based upon at least the determined intermediate value of the second parameter in the first iteration, iteratively determining successive intermediate values of the parameters based upon previously determined intermediate values of the parameters and determining the parameters from determined last intermediate values of the parameters in a final iteration. By using viable starting parameters, a quick converging of the iterative process can therefore be reached.

Advantageously, the first and second parameters are carrier frequency offset and/or sampling frequency offset and/or phase noise and/or IQ offset and/or channel estimation. The first parameter then is carrier frequency offset or sampling frequency offset or phase noise or IQ offset or channel estimation. Advantageously, the measuring device is set up for determining more than two, preferably 3, more preferably 4, even more preferably 5 parameters of the measuring signal iteratively. The measuring device is advantageously set up for determining carrier frequency offset and sampling frequency offset and phase noise and IQ offset and channel estimation iteratively. It is therefore possible to jointly determine all parameters, which cannot be determined separately.

The iteration means are advantageously set up for determining the parameters by performing at least 5 iterations, more advantageously at least 10 iterations, most advantageously at least 20 iterations. The parameters can therefore be determined without wasting computing time.

The first signal and the second signal are preferably individual antenna signals of a MIMO uplink of a device under test. Simultaneous non-identical pilot symbols are present within the first signal and the second signal. In this case, it is not possible to determine the parameters individually.

In a preferred alternative embodiment, the measuring signal comprises more than two signals. This is relevant for MIMO with more than two uplink antennas and channels.

The inventive measuring system comprises a measuring device described above and coupling means for creating the measuring signal by adding the first signal and the second signal. The signals of different antennas can therefore be combined into the one measuring signal, which can be analyzed by a single measuring device.

An inventive measuring method serves the purpose of determining at least a first parameter and a second parameter of a measuring signal. The method comprises receiving the measuring signal and processing the received measuring signal. The measuring signal comprises a first signal and a second signal. The method further comprises setting an initial value of the first parameter and iteratively determining the parameters based upon the set initial value of the first parameter. It is therefore possible to determine the parameters even in presence of a first and second signal within the measuring signal.

An exemplary embodiment of the invention is now further explained with respect to the drawings, in which

Fig. 1    shows a block diagram of an exemplary embodiment of the inventive measuring device;

Fig. 2    shows a block diagram of a detail of the exemplary embodiment of the measuring device;

Fig. 3    shows an exemplary embodiment of the inventive measuring method in a flowchart, and

Fig. 4    shows results of the measuring device and measuring method for different signal qualities.

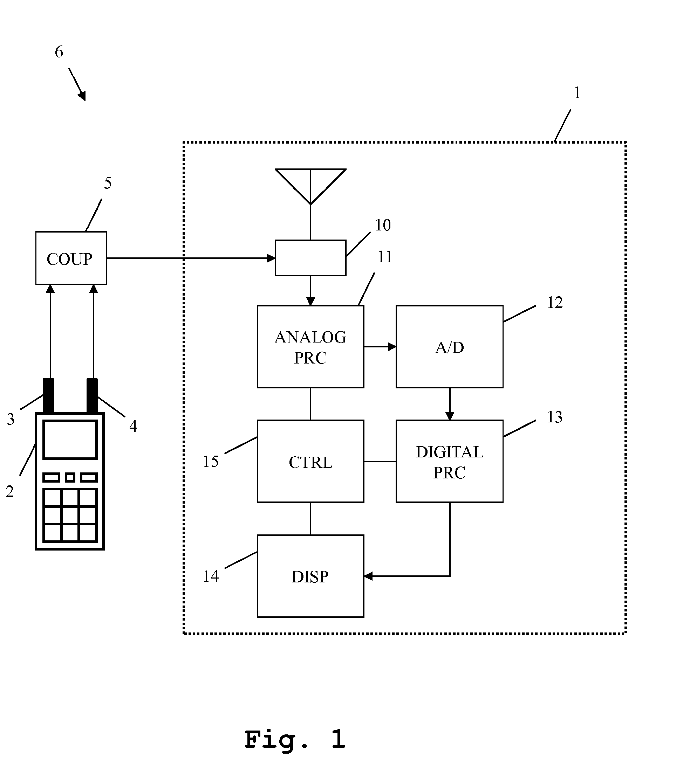

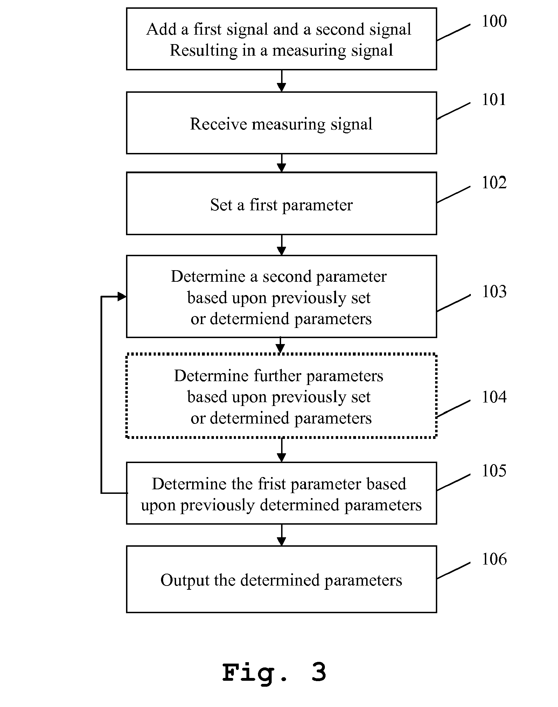

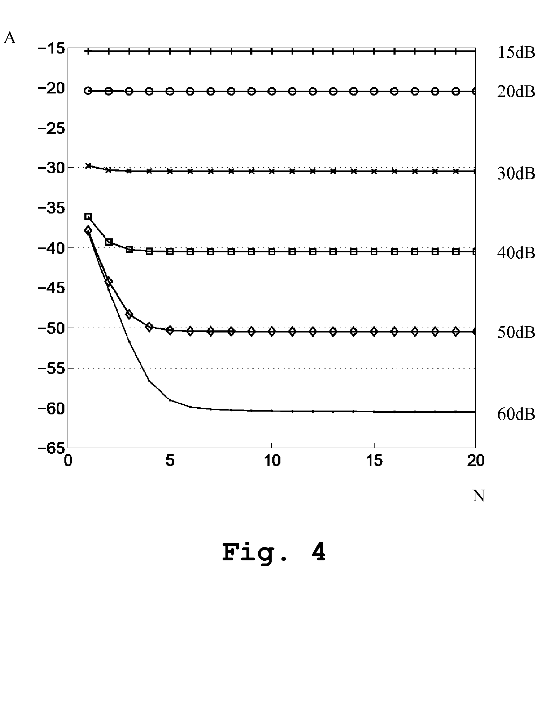

First the general construction and function of an embodiment of the inventive measuring device are demonstrated along Fig. 1-2. After that, the function of an exemplary embodiment of the inventive measuring method is shown along Fig. 3. Moreover, a detailed description of the underlying mathematics is shown. Finally, along Fig. 4, results of the inventive measuring device and measuring method are explained. Similar entities and reference numbers in different figures have been partially emitted.

In Fig. 1, an exemplary embodiment of the inventive measuring device 1 is shown. A device under test 2 comprises two antennas 3, 4. They are connected to coupling means 5, which are not part of the measuring device 1. The coupling means 5 and the measuring device 1 form a measuring system 6. The coupling means 5 are connected to input means 10, which are part of the measuring device 1. The input means 10 are connected to analog processing means 11, which again are connected to an analog-digital-converter 12. The analog-digital-converter 12 is connected to digital processing means 13, which again are connected to display means 14. Moreover, the measuring device 1 comprises control means 15, which are connected to the analog processing means 11, the digital processing means 13 and the display means 14.

The control means 15 are set up for controlling the function of the connected analog processing means 11, the connected digital processing means 13 and the connected display means 14.

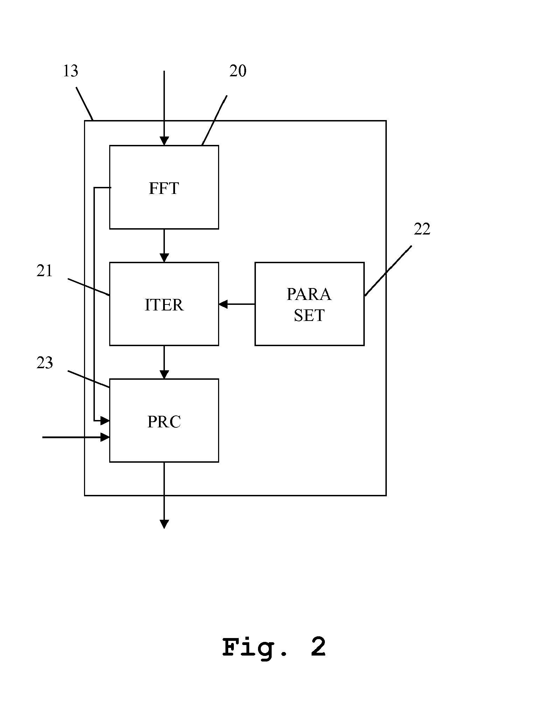

When a measurement is performed, the device under test 2 sends out at least two signals, each with one of its MIMO antennas 3, 4. These signals are combined into a measuring signal by the coupling means 5. The measuring signal is handed on to the input means 10 of the measuring device 1. The input means 10 comprise for example a pre-amplifier, which performs a pre-amplification. A resulting signal is handed on to the analog processing means 11, which perform analog processing, for example a frequency reduction to the base band and a filtering. A resulting signal is handed on to the analog-digital-converter 12, which digitizes the signal and hands it on to the digital processing means 13. The digital processing means 13 perform further digital processing, for example a demodulation and a decoding of the individual signals within the measuring signal. Especially though, the digital processing means 13 determine parameters of the measuring signal iteratively. For example, the carrier frequency error, the sample frequency error, the phase noise, the IQ offset and a channel estimation are determined by digital processing means 13. Regarding the function of the digital processing means 13, it is furthermore referred to the elaborations regarding Fig. 2.

The results of the digital processing means 13 are handed on to the display means 14 and displayed. Instead of the display means 14, alternatively, output means or storage means can be present within the measuring device 1. In this case, the results of the digital processing means 13 are handed to the output means or to the storage means.

Fig. 2 shows a detail of the exemplary embodiment of the inventive measuring device. In Fig. 2, the internals of the digital processing means 13 are shown in a block diagram. The digital processing means 13 comprise transformation means 20, which are connected to the analog-digital-converter 12. The transformation means 20 are connected to iteration means 21, which again are connected to parameter setting means 22. Moreover, the iteration means 21 are connected to processing means 23. The processing means 23 are connected to the display means 14 of Fig. 1. The iteration means 21, the parameter setting means 22 and the processing means 23 are connected to the control means 15 of Fig. 1. These connections though are not displayed here.

The digitized signal is passed on to the transformation means 20 and transformed into the frequency domain. The digitized signal is furthermore handed on to the processing means 23. The signal in the frequency domain is passed on to the iteration means 21, which iteratively determines the parameters of the measuring signal. In order to do this, the parameter setting means 22 set an initial value of at least one of the parameters. Based on this initial value, the further parameters are determined iteratively. As soon as an intermediate value for all of the parameters has been determined, an iterative value for the first parameter, which had been initially set by the parameter setting means 22 is also determined. After a number of iteration has been performed, final values of the parameters are determined and handed on to the processing means 23. Moreover, the signal in the frequency domain is also handed on to the processing means 23.

The processing means 23 now perform the demodulation and decoding of the signals based upon the parameters determined earlier. Results of the iteration means 21 and of the processing means 23 are handed on to the display means 14 of Fig. 1.

Fig. 3 shows an exemplary embodiment of the inventive measuring method. In a first step 100, a first signal and a second signal, which correspond to the antenna signals of the antennas 3, 4 of the device under test of Fig. 1 are added in order to form a measuring signal. The measuring signal is received in a second step 101. In this step, also for example a pre-amplification, a frequency reduction, a filtering and a digitizing are performed.

In a third step 102, a first parameter of the measuring signal is set to a pre-defined value. In a fourth step 103, an intermediate value of a second parameter is determined based upon the previously set first parameter. In an optional fifth step 104 further intermediate values of parameters are determined based upon the previously set first parameter and the determined intermediate value of the second parameter. In a sixth step 105 an intermediate value of the first parameter is determined based upon the previously determined other intermediate values of the parameters. The steps 103 to 105 are repeated until the iterative process converges. Final intermediate parameters are used as the final values of the parameters. Either the number of iterations is preset, or a detection is performed, if the process has already converged. It is important to note, that during the iterative process, each parameter is determined based upon all parameters of the last iteration. In case, there was no last iteration, the parameters are determined based upon the preset first parameter.

Alternatively, more than one parameter can be preset. In this case, in the first iteration, the intermediate parameters are determined based upon the several preset initial parameters. In a seventh step 106, the determined final parameters are output or stored or displayed.

In the following, a detailed explanation of the iterative process of determining the parameters is given. This detailed process is performed by the digital processing means 13, especially by the transformation means 20, the iteration means 21 and the parameter setting means 22 of Fig. 1 and Fig. 2. Moreover, this process corresponds to the steps 101 to 105 of Fig. 3.

Abbreviations used in this application are summarized in the following table:

| Abbreviation | Description |
| --- | --- |
| CFO | Carrier Frequency Offset |
| CPE | Common Phase Error |
| EVM | Error Vector Magnitude |
| MIMO | Multiple In Multiple Out |
| MISO | Multiple In Single Out |
| OFDM | Orthogonal Frequency Domain Multiplexing |
| PRB | Physical Resource Block |
| SISO | Single In Single Out |
| SFO | Sample frequency offset |
| SNR | Signal to noise ratio |
| SRS | Sounding Reference Symbol |
| UL | Uplink |

After the time to frequency transformation by a FFT of length $N_{FFT}$ by the transformation means 20 or the receiving step 101, the received symbol $r_{l,k}(p_R)$ in frequency domain on subcarrier $k$ at OFDM symbol $l$ of each receive antenna $p_R$ can be expressed as

$$r_{l,k}(p_R) = \underbrace{\exp(j\,2\pi \cdot N_s/N_{\mathrm{FFT}} \cdot \zeta \cdot l \cdot k)}_{\text{SFO}} \cdot \underbrace{\exp(j\,2\pi \cdot N_s/N_{\mathrm{FFT}} \cdot \Delta f T \cdot l)}_{\text{res. CFO}} \cdot \underbrace{\exp(j \cdot d\gamma_l(p_R))}_{\text{phase noise}}$$

$$\cdot \underbrace{\exp(-j\,2\pi/N_{\mathrm{FFT}} \cdot D \cdot k)}_{\text{delay}} \cdot \left( \sum_{\lambda=0}^{L-1} \widetilde{H}_k(p_R,\lambda) \cdot a_{l,k}(\lambda) + b(p_R) \cdot C_k \right) + n_{l,k}$$

Eq. 1

with

- the relative sampling frequency offset (SFO) $\zeta$,
- the residual carrier frequency offset (CFO) $\Delta f$ in Hz,
- the residual carrier frequency offset normalized to the subcarrier spacing $\Delta f \cdot T$,
- the residual carrier frequency offset normalized to the sample rate $\Delta f \cdot T/N_{FFT}$,
- the OFDM symbol dependent phase noise $d\gamma_l$,
- the fine timing offset or delay $D$,
- the effective complex IQ offset $b$,
- the IQ Offset interference function $C_k$,
- the pilot / DMRS symbol $a_{l,k}(\lambda)$ of layer $\lambda$ on subcarrier $k$ at OFDM symbol $l$,
- the pilot / DMRS symbol $a_{l,k}(\lambda)$ already includes the multiplicative factor $w(m)$ denoting the slot dependent Orthogonal Cover Code (OCC),
- the complex effective channel coefficient $\tilde{H}_k(p_R,\lambda)$ between layer $\lambda$ and receive antenna $p_R$,
- the number of layers $L$,
- the number of Nyquist samples $N_s$ within the symbol time $T_s$,
- the useful symbol time $T=T_s-T_g$,
- the subcarrier spacing $1/T$,
- and the independent Gaussian distributed noise sample $n_{l,k}$.

The delay does not need to be estimated separately and thus is included into the channel transfer function.

Due to the half subcarrier shift in LTE UL, there is an influence of the IQ Offset $b$ on all subcarriers. The influence is described by the interference function $C_k$ and is different for each subcarrier. The interference function $C_k$ is fixed and known. Consequential there is only one IQ Offset $b$ to be estimated.

If the FFT window of the optimum window is shifted to the position of the useful part of the symbol by a circular shift, the interference function is given by

$$C_k^{'} = e^{j\pi \frac{\Delta n \cdot (2k+1)}{N_{FFT}}} \cdot C_k = e^{j\pi \frac{\Delta n \cdot (2k+1)}{N_{FFT}}} \cdot \mathrm{FFT}\left\{ e^{-j\pi \frac{n}{N_{FFT}}} \right\}$$

Eq. 2

with $\Delta n$ as the number of samples in time domain the FFT window starts before the useful part of the symbol, i.e. $\Delta n$ is positive.

If no circular shift of the FFT window of the optimum window is performed, the interference function is given by

$$C_k = \mathrm{FFT}\left\{ e^{-j\pi \frac{n}{N_{FFT}}} \right\}.$$

Eq. 3

The SFO, CFO and phase noise are assumed to be the same for all transmit antennas. This assumption holds as long as only one reference oscillator is used in the UE and all mixers in the UE use the same local oscillator (LO).

The channel is different for each subcarrier, while CFO, SFO and phase noise are the same for all subcarriers.

CFO, SFO, Channel and IQ Offset are assumed to be constant over the duration of a subframe. The symbol wise phase noise are assumed to be constant over the duration of one OFDM Symbol.

| | Transmit antenna or layer dependency | Subcarrier dependency | Time dependency |
|---|---|---|---|
| CFO | none | none | constant over the duration of a subframe |
| SFO | none | none | constant over the duration of a subframe |
| Phase noise | none | none | constant over the duration of one OFDM Symbol |
| IQ Offset | none | implicit | constant over the duration of a subframe |
| Channel | layer dependent | Yes | constant over the duration of a subframe |

For MIMO channel estimation only the MISO channel estimation needs to be derived and considered. For each receive antenna an independent MISO channel estimation can be performed.

For MISO Time Alignment Measurement, two transmit antennas are connected to one receive antenna.

There is one important ambiguity which has to be considered in Eq. 1 when estimating CFO and Phase Noise. The CFO is constant over all OFDM symbols while the phase noise is different for each OFDM symbol. Both are independent from the subcarrier. So the symbol independent CFO can be fully described by the symbol wise phase noise. To get no underdetermined system of equations, at first only the preliminary symbol wise phase noise is estimated. By doing that the CFO is included into the preliminary phase noise estimate. Afterwards the preliminary symbol wise phase noise estimate is decomposed into the symbol independent CFO and the correct symbol wise phase noise.

In comparison to other MIMO standards like LTE DL, LTE Advanced DL or Mobile WiMAX, the pilot symbols are not transmitted exclusively by one layer or transmit antenna. If the pilots are transmitted exclusively by one layer, the estimation of CFO and SFO can be based on correlating two pilot symbols at different OFDM symbols. In addition the estimation of CFO/SFO can be performed separately from IQ Offset and channel estimation. In LTE Advanced UL the pilot symbols are transmitted by all layers simultaneously. As the received symbol $r_{l,k}$ consists of the sum of all transmitted pilot symbols, the existing approaches are not possible anymore.

An iterative approach is performed to jointly estimate the parameters residual CFO, SFO, phase noise, IQ Offset and channel. As channel and CFO are connected in a non linear fashion, a direct non-iterative solution does not seem to be possible.

During each iteration the estimated intermediate values of the parameters change compared to last iteration. This improvement is an indicator if the iteration already converged and how accurate the estimated values are. The improvement is calculated. If a predefined number of iterations is reached or if the improvement is smaller than a certain threshold, the iteration is stopped.

In the reference path, the estimation is performed for each subframe independently. In the reference path only the DMRS OFDM symbols may be used, so $N_l$ is the number of OFDM symbols per subframe. In case of PUSCH, there are $N_l=2$ DMRS OFDM symbols in a subframe.

A good starting point seems to be the ideal DUT which has no impairments. Thus the following starting values are chosen:

- complex IQ offset $b(p_R) = 0,$

- the complex effective channel coefficients are initialized with $\tilde{H}_k(pR,\lambda)=1 \ \forall k.$

The iterative estimation is performed as follows. An iteration consists of the following estimation steps and optionally the last checking step:

1. Using the above starting values for the channel coefficients and the IQ Offset or the estimated values from the last iteration, the values $F_{l,k}$ according to Eq. 14 for all allocated subcarriers are calculated, but only for the DMRS OFDM symbols.

2. The residual CFO, SFO and phase noise are estimated based on all DMRS OFDM symbols of a subframe.

3. Separate Channel and IQ Offset Estimation

a. The IQ Offset is estimated according to Eq. 35, if the RBs around the DC subcarrier are allocated. Otherwise it is assumed to be zero during the joint estimation.

b. Using the estimated CFO, SFO, phase noise and IQ Offset, the values $\tilde{r}_{l,k}(p_R)$ according to Eq. 44 for all allocated subcarriers are calculated, but only for the DMRS OFDM symbols.

c. Based on $\tilde{r}_{l,k}(p_R)$ the effective channel coefficients $\tilde{H}_k(p_R, \lambda)$ are estimated. The estimation is based on the DMRS OFDM symbols only. The subframe wise channel estimate is used further on. The slot wise channel estimates are not required.

4. Alternative Combined Channel and IQ Offset Estimation (Do not perform this step if step 3 was performed)

a. Using the estimated CFO, SFO and phase noise, the values $\tilde{r}_{l,k}(p_R)$ according to Eq. 45 for all allocated subcarriers are calculated, but only for the DMRS OFDM symbols.

b. Channel and IQ Offset Estimation

i. If the RBs around the DC subcarrier are not allocated, only channel estimation without estimating an IQ Offset is performed.

ii. If the RBs around the DC subcarrier are allocated, a joint channel and IQ Offset estimation is performed.

Based on $\tilde{r}_{l,k}(p_R)$ the IQ Offset (if required) and for each subcarrier its effective channel coefficients $\tilde{H}_k(p_R, \lambda)$ are estimated. The estimation is based on the DMRS OFDM symbols only. The subframe wise channel estimate is used further on. The slot wise channel estimates are not required.

5. Stop iteration if a predefined number of iterations is reached or if the improvement is smaller than a certain threshold.

In the measurement path the estimation is performed for each slot independently. This is a requirement of the standard. In the measurement path the DMRS and data OFDM symbols with $N_l$ being the number of DMRS and data OFDM symbols of a slot are used. This is required to get an estimate of phase noise for each OFDM symbol.

The IQ Offset and the channel coefficients are initialized with the estimated values from the reference path.

The iterative estimation is performed as follows. An iteration consists of the following estimation steps and the last checking step:

1. Using the above starting values for the channel coefficients and the IQ Offset or the estimated values from the last iteration, the values $F_{l,k}$ according to Eq. 14 for all allocated subcarriers are calculated, for the DMRS and data OFDM symbols.

2. The residual CFO, SFO and phase noise are estimated based on the DMRS and data OFDM symbols of a subframe.

3. Separate Channel and IQ Offset Estimation

a. The IQ Offset is estimated according to Eq. 35, if the RBs around the DC subcarrier are allocated. Otherwise it is assumed to be zero during the joint estimation.

b. Using the estimated CFO, SFO, phase noise and IQ Offset, the values $\tilde{r}_{l,k}(p_R)$ according to Eq. 44 for all allocated subcarriers are calculated, for the DMRS and data OFDM symbols.

c. Based on $\tilde{r}_{l,k}(p_R)$ the effective and/or physical channel coefficients $\tilde{H}_k(p_R, \lambda)$ are estimated. The estimation is based on the DMRS and data OFDM symbols. The slot wise channel estimate is used further on. A subframe wise channel estimate is not required.

4. Alternative Combined Channel and IQ Offset Estimation (Do not perform this step if step 3 was performed)

a. Using the estimated CFO, SFO and phase noise, the values $\tilde{r}_{l,k}(p_R)$ according to Eq. 45 for all allocated subcarriers are calculated, for the DMRS and data OFDM symbols.

b. Channel and IQ Offset Estimation

    i. If the RBs around the DC subcarrier are not allocated, only channel estimation without estimating an IQ Offset is performed.

    ii. If the RBs around the DC subcarrier are allocated, a joint channel and IQ Offset estimation is performed.

Based on $\tilde{r}_{l,k}(p_R)$ the IQ Offset (if required) and for each subcarrier its effective and/or physical channel coefficients $\tilde{H}_k(p_R, \lambda)$ are estimated. The estimation is based on the DMRS and data OFDM symbols. The slot wise channel estimate is used further on. A subframe wise channel estimate is not required.

5. Stop iteration if a predefined number of iterations is reached or if the improvement is smaller than a certain threshold.

The approach uses the PUSCH DMRS symbols of both slots of a subframe and requires that all estimated parameters can be assumed to be constant over this period. Furthermore the approach requires that the same subcarriers / PRBs are active on both slots. As no frequency hopping is allowed for MIMO, this requirement is always fulfilled. The Eq. 1 is rewritten as

$$r_{l,k}(p_R) = \exp(j\,\Phi) \cdot \left( \sum_{\lambda=0}^{L-1} \tilde{H}_k(p_R, \lambda) \cdot a_{l,k}(\lambda) + b \cdot C_k \right) + n_{l,k}$$

Eq. 4

with

$$\Phi = 2\pi \cdot N_s / N_{\mathrm{FFT}} \cdot (\zeta \cdot k + \Delta f T) \cdot l + d\gamma_l \; .$$

Eq. 5

For the ML approach the cost function

$$L = \sum_k \sum_l L_{l,k}$$

Eq. 6

with

$$L_{l,k} = \left| r_{l,k}(p_R) - \exp(j\,\Phi) \cdot \left( \sum_{\lambda=0}^{L-1} \tilde{H}_k(p_R, \lambda) \cdot a_{l,k}(\lambda) + b \cdot C_k \right) \right|^2$$

Eq. 7

has to be minimized. The cost function follows to

$$L_{l,k} = \left|r_{l,k}(p_R)\right|^2 - 2 \cdot \mathrm{Re}\left\{r_{l,k}(p_R) \cdot \left(\exp(\mathrm{j}\,\Phi) \cdot \left(\sum_{\lambda=0}^{L-1} \widetilde{H}_k(p_R,\lambda) \cdot a_{l,k}(\lambda) + b \cdot C_k\right)\right)^*\right\}$$

$$+ \left|\exp(\mathrm{j}\,\Phi) \cdot \left(\sum_{\lambda=0}^{L-1} \widetilde{H}_k(p_R,\lambda) \cdot a_{l,k}(\lambda) + b \cdot C_k\right)\right|^2$$

Eq. 8

and further on to

$$L_{l,k} = \left|r_{l,k}(p_R)\right|^2 - 2 \cdot \mathrm{Re}\left\{r_{l,k}(p_R) \cdot \exp(-\mathrm{j}\,\Phi) \cdot \left(\sum_{\lambda=0}^{L-1} \widetilde{H}_k(p_R,\lambda) \cdot a_{l,k}(\lambda) + b \cdot C_k\right)^*\right\}$$

$$+ \left|\exp(\mathrm{j}\,\Phi) \cdot \sum_{\lambda=0}^{L-1} \widetilde{H}_k(p_R,\lambda) \cdot a_{l,k}(\lambda)\right|^2 + 2\,\mathrm{Re}\left\{\exp(\mathrm{j}\,\Phi) \cdot \left(\sum_{\lambda=0}^{L-1} \widetilde{H}_k(p_R,\lambda) \cdot a_{l,k}(\lambda)\right) \cdot \exp(-\mathrm{j}\,\Phi) \cdot b^* \cdot C_k^*\right\}$$

$$+ \left|\exp(\mathrm{j}\,\Phi) \cdot b \cdot C_k\right|^2$$

Eq. 9

and

$$L_{l,k} = \left|r_{l,k}(p_R)\right|^2 - 2 \cdot \mathrm{Re}\left\{r_{l,k}(p_R) \cdot \exp(-\mathrm{j}\,\Phi) \cdot \left(\sum_{\lambda=0}^{L-1} \widetilde{H}_k(p_R,\lambda) \cdot a_{l,k}(\lambda)\right)^*\right\} - 2 \cdot \mathrm{Re}\left\{r_{l,k}(p_R) \cdot \exp(-\mathrm{j}\,\Phi) \cdot b^* \cdot C_k^*\right\}$$

$$+ \left|\exp(\mathrm{j}\,\Phi) \cdot \sum_{\lambda=0}^{L-1} \widetilde{H}_k(p_R,\lambda) \cdot a_{l,k}(\lambda)\right|^2 + 2 \cdot \mathrm{Re}\left\{\left(\sum_{\lambda=0}^{L-1} \widetilde{H}_k(p_R,\lambda) \cdot a_{l,k}(\lambda)\right) \cdot b^* \cdot C_k^*\right\} + \left|\exp(\mathrm{j}\,\Phi) \cdot b \cdot C_k\right|^2$$

Eq. 10

or

$$L_{l,k} = \left|r_{l,k}(p_R)\right|^2 - 2 \cdot \mathrm{Re}\left\{r_{l,k}(p_R) \cdot \exp(-\mathrm{j}\,\Phi) \cdot \left(\sum_{\lambda=0}^{L-1} \widetilde{H}_k(p_R,\lambda) \cdot a_{l,k}(\lambda)\right)^*\right\} - 2 \cdot \mathrm{Re}\left\{r_{l,k}(p_R) \cdot \exp(-\mathrm{j}\,\Phi) \cdot b^* \cdot C_k^*\right\}$$

$$+ \left|\exp(\mathrm{j}\,\Phi) \cdot \sum_{\lambda=0}^{L-1} \widetilde{H}_k(p_R,\lambda) \cdot a_{l,k}(\lambda)\right|^2 + 2 \cdot \mathrm{Re}\left\{\left(\sum_{\lambda=0}^{L-1} \widetilde{H}_k(p_R,\lambda) \cdot a_{l,k}(\lambda)\right)^* \cdot b \cdot C_k\right\} + \left|\exp(\mathrm{j}\,\Phi) \cdot b \cdot C_k\right|^2$$

Eq. 11

To get an equation to determine $\Phi$, i.e. SFO, CFO and phase noise, the cost function Eq. 10 is derived with respect to $\Phi$

$$\frac{d}{d\,\Phi}L_{l,k} = -2\cdot\mathrm{Re}\left\{r_{l,k}(p_R)\cdot(-j)\cdot\exp(-\mathrm{j}\,\Phi)\cdot\left(\sum_{\lambda=0}^{L-1}\widetilde{H}_k(p_R,\lambda)\cdot a_{l,k}(\lambda)\right)^{*}\right\}$$
$$-2\cdot\mathrm{Re}\left\{r_{l,k}(p_R)\cdot(-j)\cdot\exp(-\mathrm{j}\,\Phi)\cdot b^{*}\cdot C_k^{*}\right\}$$

<div align="right">Eq. 12</div>

and follows to

$$\frac{d}{d\,\Phi}L_{l,k} = +2\cdot\mathrm{Re}\left\{r_{l,k}(p_R)\cdot\left[\left(\sum_{\lambda=0}^{L-1}\widetilde{H}_k(p_R,\lambda)\cdot a_{l,k}(\lambda)\right)+b\cdot C_k\right]^{*}\cdot j\cdot\exp(-\mathrm{j}\,\Phi)\right\}.$$

<div align="right">Eq. 13</div>

The derivate is set to zero

$$\frac{d}{d\,\Phi}L = \sum_k\sum_l\frac{d}{d\,\Phi}L_{l,k} = \sum_k\sum_l 2\cdot\mathrm{Re}\left\{\underbrace{r_{l,k}(p_R)\cdot\left[\left(\sum_{\lambda=0}^{L-1}\widetilde{H}_k(p_R,\lambda)\cdot a_{l,k}(\lambda)\right)+b\cdot C_k\right]^{*}}_{=F_{l,k}(p_R)}\cdot j\cdot\exp(-\mathrm{j}\,\Phi)\right\}\equiv 0$$

<div align="right">Eq. 14</div>

The expression Eq. 14 gets zero if

$$\boxed{\Phi = \arg\bigl(F_{l,k}(p_R)\bigr)\quad\forall l,k}.$$

<div align="right">Eq. 15</div>

In this case the expression

$$F_{l,k}(p_R)\cdot\exp(-\mathrm{j}\,\Phi)$$

<div align="right">Eq. 16</div>

is real and the expression

<div align="center">**10**</div>

$$\frac{d}{d\Phi}L = \sum_k \sum_l \frac{d}{d\Phi}L_{l,k} = \sum_k \sum_l 2 \cdot \mathrm{Re}\{F_{l,k}(p_R) \cdot j \cdot \exp(-\mathrm{j}\,\Phi)\} = 0$$

Eq. 17

is zero.

The estimation problem Eq. 15 is a highly over determined system of equations and is solved by Vector Matrix Inversion.

For implementation it should be noted, that an unwrap operation is performed on $\arg(F_{l,k}(p_R))$ for each OFDM Symbol. This eliminates discontinuities.

The number of allocated subcarriers per OFDM symbol is denoted as $N_k$. As no PUSCH frequency hopping is allowed for MIMO, the allocated subcarriers are the same for both slots of a subframe. Additionally, the allocated subcarriers are the same for the DMRS OFDM symbols and data OFDM symbols.

In the reference path only the DMRS OFDM symbols may be used, so $N_l$ is the number of OFDM symbols per subframe. In case of PUSCH, there are $N_l=2$ DMRS OFDM symbols in a subframe.

In the measurement path the DMRS and data OFDM symbols with $N_l$ being the number of DMRS and data OFDM symbols of a slot are used. This is required to get an estimate of phase noise for each OFDM symbol.

Estimation of SFO and CFO only

For one receive antenna the estimation problem Eq. 18 can be rewritten in matrix vector notation as follows

$$\underbrace{\begin{bmatrix} 2\pi \cdot N_s/N_{FFT} \cdot l_0 \cdot k_0 & 2\pi \cdot N_s/N_{FFT} \cdot l_0 \\ \vdots & \vdots \\ 2\pi \cdot N_s/N_{FFT} \cdot l_0 \cdot k_{N_k-1} & 2\pi \cdot N_s/N_{FFT} \cdot l_0 \\ 2\pi \cdot N_s/N_{FFT} \cdot l_1 \cdot k_0 & 2\pi \cdot N_s/N_{FFT} \cdot l_1 \\ \vdots & \vdots \\ 2\pi \cdot N_s/N_{FFT} \cdot l_1 \cdot k_{N_k-1} & 2\pi \cdot N_s/N_{FFT} \cdot l_1 \\ \vdots & \vdots \\ 2\pi \cdot N_s/N_{FFT} \cdot l_{N_l-1} \cdot k_{N_k-1} & 2\pi \cdot N_s/N_{FFT} \cdot l_{N_l-1} \end{bmatrix}}_{=A} \cdot \underbrace{\begin{bmatrix} \zeta \\ \Delta fT \end{bmatrix}}_{=x_{CFO,SFO}} = \underbrace{\begin{bmatrix} \arg(F_{l_0,k_0}(p_R)) \\ \vdots \\ \arg(F_{l_0,k_{N_k-1}}(p_R)) \\ \arg(F_{l_1,k_0}(p_R)) \\ \vdots \\ \arg(F_{l_1,k_{N_k-1}}(p_R)) \\ \vdots \\ \arg(F_{l_{N_l-1},k_{N_k-1}}(p_R)) \end{bmatrix}}_{=y(p_R)}$$

Eq. 18

The matrix $A$ and the vector $x_{CFO,SFO}$ are independent from the considered receive antenna $p_R$.

As CFO and SFO are independent from the receive antenna, CFO and SFO are estimated jointly over all receive antennas. Therefore for two receive antennas the estimation problem is written in matrix vector notation as follows

$$\underbrace{\begin{bmatrix} A \\ A \end{bmatrix}}_{=B} \cdot x_{CFO,SFO} = \underbrace{\begin{bmatrix} y(0) \\ y(1) \end{bmatrix}}_{=y}.$$

Eq. 19

The vector $x_{CFO,SFO}$ contains the unknowns while $A$, $B$ and $y$ are known. The matrices $A$ and $B$ and its Pseudoinverse can be calculated once before the first iteration and not in every iteration step. The solution of Eq. 18 is:

$$x_{CFO,SFO} = pinv(A) \cdot y(0)$$

Eq. 20

and of Eq. 19 it is

$$x_{CFO,SFO} = pinv(B) \cdot y$$

Eq. 21

using the Moore-Penrose Pseudoinverse $pinv(\cdot)$.

Estimation of SFO, CFO and Phase Noise

For one receive antenna the estimation problem Eq. 15 can be rewritten in matrix vector notation as follows

$$\begin{bmatrix} 2\pi \cdot N_s/N_{FFT} \cdot l_0 \cdot k_0 & 2\pi \cdot N_s/N_{FFT} \cdot l_0 & 1 & 0 & \cdots & 0 \\ \vdots & & \vdots & 1 & 0 & \cdots & 0 \\ 2\pi \cdot N_s/N_{FFT} \cdot l_0 \cdot k_{N_k-1} & 2\pi \cdot N_s/N_{FFT} \cdot l_0 & 1 & 0 & \cdots & 0 \\ 2\pi \cdot N_s/N_{FFT} \cdot l_1 \cdot k_0 & 2\pi \cdot N_s/N_{FFT} \cdot l_1 & 0 & 1 & \cdots & 0 \\ \vdots & & \vdots & 0 & 1 & \cdots & 0 \\ 2\pi \cdot N_s/N_{FFT} \cdot l_1 \cdot k_{N_k-1} & 2\pi \cdot N_s/N_{FFT} \cdot l_1 & 0 & 1 & \cdots & 0 \\ \vdots & & \vdots & \vdots & \vdots & \vdots & \vdots \\ 2\pi \cdot N_s/N_{FFT} \cdot l_{N_l-1} \cdot k_{N_k-1} & 2\pi \cdot N_s/N_{FFT} \cdot l_{N_l-1} & 0 & \cdots & 0 & 1 \end{bmatrix} \cdot \underbrace{\begin{bmatrix} \zeta \\ \Delta f T \\ d\gamma_{l_0}(p_R) \\ d\gamma_{l_1}(p_R) \\ \vdots \\ d\gamma_{l_{N_l-1}}(p_R) \end{bmatrix}}_{=x} = \underbrace{\begin{bmatrix} \arg(F_{l_0,k_0}(p_R)) \\ \vdots \\ \arg(F_{l_0,k_{N_k-1}}(p_R)) \\ \arg(F_{l_1,k_0}(p_R)) \\ \vdots \\ \arg(F_{l_1,k_{N_k-1}}(p_R)) \\ \vdots \\ \arg(F_{l_{N_l-1},k_{N_k-1}}(p_R)) \end{bmatrix}}_{=y(p_R)}$$

Eq. 22

Due to the described ambiguity CFO vs. Phase Noise, this equation cannot be solved. Instead at first only the preliminary symbol wise phase noise $\tilde{d\gamma}_{l_i}(p_R)$ is estimated. By doing that the CFO is included into the preliminary phase noise estimate. Afterwards the preliminary symbol wise phase noise estimate is decomposed into the symbol independent CFO and the correct symbol wise phase noise $d\gamma_{l_i}(p_R)$. This decomposition is only required once after the last iteration. Due to the ambiguity of CFO and phase noise, it is sufficient to estimate and compensate only the phase noise during the iterations.

For one receive antenna Eq. 22 is written in short hand notation, assuming the CFO to be zero, as follows

$$\underbrace{\begin{bmatrix} C & D \end{bmatrix}}_{=E} \cdot \underbrace{\begin{bmatrix} \zeta \\ x_{\tilde{\gamma}(0)} \end{bmatrix}}_{=x} = \underbrace{\begin{bmatrix} y(0) \end{bmatrix}}_{=y}$$

Eq. 23

with

$$C = \begin{bmatrix} 2\pi \cdot N_s / N_{\text{FFT}} \cdot l_0 \cdot k_0 \\ \vdots \\ 2\pi \cdot N_s / N_{\text{FFT}} \cdot l_0 \cdot k_{N_k-1} \\ 2\pi \cdot N_s / N_{\text{FFT}} \cdot l_1 \cdot k_0 \\ \vdots \\ 2\pi \cdot N_s / N_{\text{FFT}} \cdot l_1 \cdot k_{N_k-1} \\ \vdots \\ 2\pi \cdot N_s / N_{\text{FFT}} \cdot l_{N_l-1} \cdot k_{N_k-1} \end{bmatrix}, \qquad D = \begin{bmatrix} 1 & 0 & \cdots & 0 \\ 1 & 0 & \cdots & 0 \\ 1 & 0 & \cdots & 0 \\ 0 & 1 & \cdots & 0 \\ 0 & 1 & \cdots & 0 \\ 0 & 1 & \cdots & 0 \\ \vdots & \vdots & \vdots & \vdots \\ 0 & \cdots & 0 & 1 \end{bmatrix},$$

$$x_{\tilde{\gamma}(p_R)} = \begin{bmatrix} d\tilde{\gamma}_{l_0}(p_R) \\ d\tilde{\gamma}_{l_1}(p_R) \\ \vdots \\ d\tilde{\gamma}_{l_{N_l-1}}(p_R) \end{bmatrix}.$$

Eq. 24

The matrices **C and D** and the scalar $\zeta$ (SFO) are independent from the considered receive antenna $p_R$.

As CFO and SFO are independent from the receive antenna, CFO and SFO are estimated jointly over all receive antennas. Therefore for two receive antennas the estimation problem is written in matrix vector notation as follows

$$\underbrace{\begin{bmatrix} C & D & 0 \\ C & 0 & D \end{bmatrix}}_{=E} \cdot \underbrace{\begin{bmatrix} \zeta \\ x_{\tilde{\gamma}(0)} \\ x_{\tilde{\gamma}(1)} \end{bmatrix}}_{=x} = \underbrace{\begin{bmatrix} y(0) \\ y(1) \end{bmatrix}}_{=y} .$$

Eq. 25

The vector *x* contains the unknowns while **E** and **y** are known. The matrices **E** and its Pseudoinverse can be calculated once before the first iteration and not in every iteration step.

The solution of Eq. 23 and Eq. 25 is

$$x = pinv(E) \cdot y$$

Eq. 26

using the Moore-Penrose Pseudoinverse $pinv(\cdot)$.

Now the preliminary symbol wise phase noise estimate $d\tilde{\gamma}_{l_i}(p_R)$ is decomposed into the symbol independent CFO and the correct symbol wise phase noise $d\gamma_{l_i}(p_R)$. Therefore the phase noise of the first known OFDM symbol in each subframe is arbitrarily set to zero $d\gamma_{l_0}(p_R)=0$. The symbol independent CFO is calculated by

$$\Delta f T = \frac{1}{(N_l - 1) \cdot N_R} \sum_{p_R} \sum_{i=1}^{N_l - 1} \frac{d\tilde{\gamma}_{l_i}(p_R) - d\tilde{\gamma}_{l_0}(p_R)}{2\pi \cdot N_s / N_{\text{FFT}} \cdot (l_i - l_0)}$$

Eq. 27

Considering that the phase noise of the first known OFDM symbol should be zero, the symbol wise phase noise of the remaining OFDM symbols follows to

$$\begin{bmatrix} d\gamma_{l_1}(p_R) \\ \vdots \\ d\gamma_{l_{N_l-1}}(p_R) \end{bmatrix} = \begin{bmatrix} d\tilde{\gamma}_{l_1}(p_R) \\ \vdots \\ d\tilde{\gamma}_{l_{N_l-1}}(p_R) \end{bmatrix} - d\tilde{\gamma}_{l_0}(p_R) - \begin{bmatrix} 2\pi \cdot N_s / N_{\text{FFT}} \cdot (l_1 - l_0) \\ \vdots \\ 2\pi \cdot N_s / N_{\text{FFT}} \cdot (l_{N_l-1} - l_0) \end{bmatrix} \cdot \Delta f T \ .$$

Eq. 28

In the reference path, per subframe only the two PUSCH DMRS symbols are known. The phase difference between the two PUSCH DMRS symbols is calculated. Assuming that the phase difference between the symbols is constant in the whole subframe, the CPE for all symbols in the subframe can be estimated by a linear interpolation for the symbols between the two DMRS symbols and a linear extrapolation for the symbols at left and right side of the DMRS symbols.

To get an equation to determine the IQ Offset $b$, the cost function Eq. 10 is derived with respect to $b$

$$\frac{d}{db} L_{l,k} = -2 \cdot \text{Re}\left\{ r_{l,k}(p_R) \cdot \exp(-j\Phi) \cdot C_k^* \right\} + 2 \cdot \text{Re}\left\{ \left( \sum_{\lambda=0}^{L-1} \tilde{H}_k(p_R, \lambda) \cdot a_{l,k}(\lambda) \right) \cdot C_k^* \right\} + |C_k|^2 \cdot 2 \cdot \text{Re}\{b\}$$

Eq. 29

and follows to

$$\frac{d}{db} L_{l,k} = -2 \cdot \text{Re}\left\{ \left[ r_{l,k}(p_R) \cdot \exp(-j\Phi) - \left( \sum_{\lambda=0}^{L-1} \tilde{H}_k(p_R, \lambda) \cdot a_{l,k}(\lambda) \right) \right] \cdot C_k^* \right\} + |C_k|^2 \cdot 2 \cdot \text{Re}\{b\} \ .$$

Eq. 30

The derivate is set to zero

$$\frac{d}{db} L = \sum_k \sum_l \frac{d}{db} L_{l,k}$$

$$= \sum_k \sum_l -2 \cdot \text{Re}\left\{ \left[ r_{l,k}(p_R) \cdot \exp(-j\Phi) - \left( \sum_{\lambda=0}^{L-1} \tilde{H}_k(p_R, \lambda) \cdot a_{l,k}(\lambda) \right) \right] \cdot C_k^* \right\} + \sum_k \sum_l |C_k|^2 \cdot 2 \cdot \text{Re}\{b\} \equiv 0$$

Eq. 31

It follows

$$\sum_k \sum_l 2 \cdot \text{Re}\left\{\left[r_{l,k}(p_R) \cdot \exp(-j\Phi) - \left(\sum_{\lambda=0}^{L-1} \tilde{H}_k(p_R,\lambda) \cdot a_{l,k}(\lambda)\right)\right] \cdot C_k^*\right\} = \sum_k \sum_l |C_k|^2 \cdot 2 \cdot \text{Re}\{b\}$$

Eq. 32

As summation and taking the real part can be exchanged, it follows

$$2 \cdot \text{Re}\left\{\sum_k \sum_l \left[r_{l,k}(p_R) \cdot \exp(-j\Phi) - \left(\sum_{\lambda=0}^{L-1} \tilde{H}_k(p_R,\lambda) \cdot a_{l,k}(\lambda)\right)\right] \cdot C_k^*\right\} = 2 \cdot \text{Re}\left\{b \cdot \sum_k \sum_l |C_k|^2\right\}$$

Eq. 33

Omit to take the real part, it follows

$$\sum_k \sum_l \left[r_{l,k}(p_R) \cdot \exp(-j\Phi) - \left(\sum_{\lambda=0}^{L-1} \tilde{H}_k(p_R,\lambda) \cdot a_{l,k}(\lambda)\right)\right] \cdot C_k^* = b \cdot \sum_k \sum_l |C_k|^2 \quad .$$

Eq. 34

The IQ Offset is estimated for each receive antenna by

$$b(p_R) = \frac{\sum_k \sum_l \left[r_{l,k}(p_R) \cdot \exp(-j\Phi) - \left(\sum_{\lambda=0}^{L-1} \tilde{H}_k(p_R,\lambda) \cdot a_{l,k}(\lambda)\right)\right] \cdot C_k^*}{\sum_k \sum_l |C_k|^2} \quad .$$

Eq. 35

To get an equation to determine the channel coefficients $H_k(p_R,\lambda)$, the cost function Eq. 11 is derived with respect to $\tilde{H}_k(p_R,\lambda_i)$

$$\frac{d}{d\tilde{H}_k(p_R,\lambda_i)} L_{l,k} = -2 \cdot \text{Re}\left\{r_{l,k}(p_R) \cdot \exp(-j\Phi) \cdot a_{l,k}^*(\lambda_i)\right\}$$

$$+ 2 \cdot \text{Re}\left\{\left(\sum_{\lambda=0}^{L-1} \tilde{H}_k(p_R,\lambda) \cdot a_{l,k}(\lambda)\right) \cdot a_{l,k}^*(\lambda_i)\right\} + 2 \cdot \text{Re}\left\{a_{l,k}^*(\lambda_i) \cdot b \cdot C_k\right\}$$

Eq. 36

and follows to

$$\frac{d}{d\,\tilde{H}_k(p_R,\lambda_i)}L_{l,k} = -2\cdot\mathrm{Re}\left\{\left[r_{l,k}(p_R)\cdot\exp(-\mathrm{j}\,\Phi)-b\cdot C_k\right]\cdot a_{l,k}^{\;*}(\lambda_i)\right\}+2\cdot\mathrm{Re}\left\{\left(\sum_{\lambda=0}^{L-1}\tilde{H}_k(p_R,\lambda)\cdot a_{l,k}(\lambda)\right)\cdot a_{l,k}^{\;*}(\lambda_i)\right\}$$

$$\mathrm{Eq.}\ 37$$

The derivate is set to zero

$$\frac{d}{d\,\tilde{H}_k(p_R,\lambda_i)}L = \sum_k\sum_l \frac{d}{d\,\tilde{H}_k(p_R,\lambda_i)}L_{l,k}$$

$$= \sum_k\sum_l -2\cdot\mathrm{Re}\left\{\left[r_{l,k}(p_R)\cdot\exp(-\mathrm{j}\,\Phi)-b\cdot C_k\right]\cdot a_{l,k}^{\;*}(\lambda_i)\right\}+\sum_k\sum_l 2\cdot\mathrm{Re}\left\{\left(\sum_{\lambda=0}^{L-1}\tilde{H}_k(p_R,\lambda)\cdot a_{l,k}(\lambda)\right)\cdot a_{l,k}^{\;*}(\lambda_i)\right\}\equiv 0$$

$$\mathrm{Eq.}\ 38$$

It follows

$$\sum_k\sum_l -2\cdot\mathrm{Re}\left\{\left[r_{l,k}(p_R)\cdot\exp(-\mathrm{j}\,\Phi)-b\cdot C_k\right]\cdot a_{l,k}^{\;*}(\lambda_i)\right\}=\sum_k\sum_l 2\cdot\mathrm{Re}\left\{\left(\sum_{\lambda=0}^{L-1}\tilde{H}_k(p_R,\lambda)\cdot a_{l,k}(\lambda)\right)\cdot a_{l,k}^{\;*}(\lambda_i)\right\}$$

$$\mathrm{Eq.}\ 39$$

As summation and taking the real part can be exchanged, it follows

$$2\cdot\mathrm{Re}\left\{\sum_k\sum_l\left[r_{l,k}(p_R)\cdot\exp(-\mathrm{j}\,\Phi)-b\cdot C_k\right]\cdot a_{l,k}^{\;*}(\lambda_i)\right\}=2\cdot\mathrm{Re}\left\{\sum_k\sum_l\left(\sum_{\lambda=0}^{L-1}\tilde{H}_k(p_R,\lambda)\cdot a_{l,k}(\lambda)\right)\cdot a_{l,k}^{\;*}(\lambda_i)\right\}$$

$$\mathrm{Eq.}\ 40$$

Omit to take the real part, it follows

$$\boxed{\sum_k\sum_l\left[r_{l,k}(p_R)\cdot\exp(-\mathrm{j}\,\Phi)-b(p_R)\cdot C_k\right]=\sum_k\sum_l\left(\sum_{\lambda=0}^{L-1}\tilde{H}_k(p_R,\lambda)\cdot a_{l,k}(\lambda)\right)}$$

$$\mathrm{Eq.}\ 41$$

The channel coefficients $\tilde{H}_k(p_R,\lambda)$ are determined by solving the above system of equations.

The IQ Offset has only significant influence on the Resource Blocks (RB) around the DC subcarrier.

Channel Estimation without estimating an IQ Offset

If the RBs around the DC subcarrier are not allocated, the channel estimate is not influenced by the IQ Offset and the IQ Offset does not need to be estimated during Joint Estimation. In this case the IQ Offset can be estimated after Joint Estimation on the unallocated RBs around the DC subcarrier.

Using the estimated CFO, SFO and phase noise, the values

$$\tilde{r}_{l,k}(p_R) = r_{l,k}(p_R) \cdot \exp(-j\,\Phi)$$

Eq. 42

for all allocated subcarriers are calculated.

Based on $\tilde{r}_{l,k}(p_R)$ a MIMO Channel estimation as described in chapter channel Estimation for MIMO over the Air Mode" is performed. As shown in the above mentioned chapter, to get no under-determined system of equations, in case of two layers or two transmit antennas the channel coefficients of two adjacent subcarriers

$$\tilde{H}_k(p_R, \lambda) = \tilde{H}_{k+1}(p_R, \lambda)$$

Eq. 43

are assumed to be equal.

Separate Channel and IQ Offset Estimation

If the RBs around the DC subcarrier are allocated, an IQ Offset estimation is required. The channel and the IQ Offset are estimated separately. At first the IQ Offset is estimated according to Eq. 35. Afterwards using the estimated CFO, SFO, phase noise and IQ Offset, the values

$$\tilde{r}_{l,k}(p_R) = r_{l,k}(p_R) \cdot \exp(-j\,\Phi) - b(p_R) \cdot C_k$$

Eq. 44

for all allocated subcarriers are calculated. Based on $\tilde{r}_{l,k}(p_R)$ a pure channel estimation as described is performed.

If sequence and grouping hopping are off, the PUSCH DMRS symbols of both slots can be equal. In this case the IQ Offset does not change anymore after the first iteration. However simulations showed that this first IQ Offset estimate is already accurate enough.

Alternative Combined Channel and IQ Offset Estimation

If the RBs around the DC subcarrier are allocated, an IQ Offset estimation is required. A combined channel and IQ Offset estimation is performed. Simulation results showed that this approach is less accurate than the separate channel and IQ Offset estimation.

Using the estimated CFO, SFO and phase noise, the values

$$\tilde{r}_{l,k}(p_R) = r_{l,k}(p_R) \cdot \exp(-j\,\Phi)$$

Eq. 45

for all allocated subcarriers are calculated.

Based on $\tilde{r}_{l,k}(p_R)$ a joint MIMO Channel and IQ Offset estimation as described is performed. As shown in the above mentioned chapter, to get no under-determined system of equations, in case of two layers or two transmit antennas the channel coefficients of three adjacent subcarriers

$$\widetilde{H}_k(p_R,\lambda) = \widetilde{H}_{k+1}(p_R,\lambda) = \widetilde{H}_{k+2}(p_R,\lambda)$$

Eq. 46

are assumed to be equal.

It has to be distinguished between the channel estimation of the effective and the physical channel. While the effective channel estimate is required to set up a reference signal for the layer and transmit antennas, the physical channel estimate is required to calculate the measurement signal for the transmit antennas and for MISO Time Alignment Measurement. For MISO Time Alignment Measurement, two transmit antennas are connected to one receive antenna.

After the compensation of SFO, CFO and IQ Offset, the received symbol $\widetilde{r}_{l,k}(p_R)$ in frequency domain on subcarrier $k$ at OFDM symbol $l$ of each receive antenna $p_R$ can be expressed as

$$r_{l,k}(p_R) = \sum_{\lambda=0}^{L-1} \widetilde{H}_k(p_R,\lambda) \cdot a_{l,k}(\lambda) + n_{l,k}$$

Eq. 47

or

$$r_{l,k}(p_R) = \sum_{p_T=0}^{N_T} H_k(p_R,p_T) \cdot \sum_{\lambda=0}^{L-1} W(p_T,\lambda) \cdot a_{l,k}(\lambda) + n_{l,k}$$

Eq. 48

with the transmit antenna symbol

$$s_{l,k}(p_T) = \sum_{\lambda=0}^{L-1} W(p_T,\lambda) \cdot a_{l,k}(\lambda)$$

Eq. 49

and

- the pilot / DMRS symbol $a_{l,k}(\lambda)$ of layer $\lambda$ on subcarrier $k$ at OFDM symbol $l$,

- the pilot / DMRS symbol $a_{l,k}(\lambda)$ already includes the multiplicative factor $w(m)$ denoting the slot dependent Orthogonal Cover Code (OCC),

- the complex precoding factor $W(p_T,\lambda)$ of precoding matrix $W$ from layer $\lambda$ to transmit antenna $p_T$,

- the physical channel coefficient $H_k(p_R,p_T)$ between transmit antenna $p_T$ and receive antenna $p_R$,

- the effective channel coefficient $\widetilde{H}_k(p_R,\lambda)$ between layer $\lambda$ and receive antenna $p_R$,

- the number of layers $L$,

- and the independent Gaussian distributed noise sample $n_{l,k}$.

For each receive antenna and each subcarrier an independent MISO channel estimation can be performed. Thus for MIMO channel estimation only the MISO channel estimation needs to be derived and considered.

In the following the MISO channel estimation for a specific receive antenna on a specific subcarrier is derived.

Channel Estimation without estimating an IQ Offset

To get no under-determined system of equations, in case of two layers or two transmit antennas the channel coefficients of two adjacent subcarriers

$$\widetilde{H}_k(p_R, \lambda) = \widetilde{H}_{k+1}(p_R, \lambda)$$

Eq. 50

are assumed to be equal. In case of four layers or four transmit antennas the channel coefficients of four adjacent subcarriers

$$\widetilde{H}_k(p_R, \lambda) = \widetilde{H}_{k+1}(p_R, \lambda) = \widetilde{H}_{k+2}(p_R, \lambda) = \widetilde{H}_{k+3}(p_R, \lambda)$$

Eq. 51

are assumed to be equal.

Joint Channel and IQ Offset Estimation

To get no under-determined system of equations, in case of two layers or two transmit antennas the channel coefficients of three adjacent subcarriers

$$\widetilde{H}_k(p_R, \lambda) = \widetilde{H}_{k+1}(p_R, \lambda) = \widetilde{H}_{k+2}(p_R, \lambda)$$

Eq. 52

are assumed to be equal. In case of four layers or four transmit antennas the channel coefficients of five adjacent subcarriers

$$\widetilde{H}_k(p_R, \lambda) = \widetilde{H}_{k+1}(p_R, \lambda) = \widetilde{H}_{k+2}(p_R, \lambda) = \widetilde{H}_{k+3}(p_R, \lambda) = \widetilde{H}_{k+4}(p_R, \lambda)$$

Eq. 53

are assumed to be equal.

In the following table the possible channel estimations are summarized. In the following chapters each channel estimation is derived and described.

| Number of layers | Number of transmit antennas | Effective MISO Channel Estimation | Physical MISO Channel Estimation |
|---|---|---|---|
| 1 | 1 | ○ | ○ |

(continued)

| Number of layers | Number of transmit antennas | Effective MISO Channel Estimation | Physical MISO Channel Estimation |
|---|---|---|---|
| 1 | 2 | ○ | ● |
| 1 | 4 | ○ | ● |
| 2 | 2 | ○ | ○ |
| 2 | 4 | ○ | ● |
| 3 | 4 | ○ | ● |
| 4 | 4 | ○ | ○ |

The channel estimation can be performed subframe wise or for each slot independently.

For each group of two to five subcarriers a (joint) estimation of IQ Offset (if required) and effective channel is performed.

For each group of two to five subcarriers an IQ Offset estimate is achieved. The final IQ Offset estimate is the mean of the IQ Offset estimates.

For each group of two to five subcarriers one channel coefficient per layer is achieved. The achieved channel coefficient is valid for the subcarrier in the middle of the group. The channel coefficients on the intermediate subcarriers are achieved by interpolation. A linear interpolation may be used.

The physical channel estimate is calculated using the effective channel estimate and the precoding matrix.

Example for interpolation of channel coefficients on intermediate subcarriers

Consider the joint estimation of IQ Offset and effective MISO Channel for two layers. In this case for each group of three subcarriers one channel coefficient per layer is achieved. So for the subcarrier group $k$=0,1,2 the channel coefficient $\tilde{H}_1(p_R,\lambda)$ and for the subcarrier group $k$=3,4,5 the channel coefficient $\tilde{H}_4(p_R,\lambda)$ is achieved. The channel coefficients $\tilde{H}_2(p_R,\lambda)$ and $\tilde{H}_3(p_R,\lambda)$ are achieved by linear interpolation according to

$$\tilde{H}_2(p_R,\lambda)=\frac{2}{3}\tilde{H}_1(p_R,\lambda)+\frac{1}{3}\tilde{H}_4(p_R,\lambda)$$

$$\tilde{H}_3(p_R,\lambda)=\frac{1}{3}\tilde{H}_1(p_R,\lambda)+\frac{2}{3}\tilde{H}_4(p_R,\lambda)$$

Eq. 54

The following approach uses the PUSCH DMRS symbols only.

Slot wise estimation

To perform the estimation per slot independently, in case of up to two layers, collecting the known DMRS symbols of two adjacent subcarriers in the matrix

$$B=\begin{bmatrix} a_{l,k}(0) & a_{l,k}(1) \\ a_{l,k+1}(0) & a_{l,k+1}(1) \end{bmatrix},$$

Eq. 55

the effective channel estimation problem Eq. 47 can be rewritten with Eq. 43 in matrix vector notation according to

$$\underbrace{\begin{bmatrix} r_{l,k}(p_R) \\ r_{l,k+1}(p_R) \end{bmatrix}}_{r_{l,k}(p_R)} = B \cdot \underbrace{\begin{bmatrix} \widetilde{H}_k(p_R,0) \\ \widetilde{H}_k(p_R,1) \end{bmatrix}}_{\widetilde{H}_k(p_R)} + \begin{bmatrix} n_{l,k} \\ n_{l,k+1} \end{bmatrix}$$

Eq. 56

with the column vectors $\tilde{H}_k(pR)$ and $r_{l,k}(p_R)$.

Whether a solution for the channel estimation problem exists, depends on the condition of the matrix **B**.

The zero forcing channel estimate follows to

$$\hat{\tilde{H}}_k(p_R) = B^{-1} \cdot r_{l,k}(p_R)\,.$$

Subframe wise estimation

To perform a subframe wise estimation, in case of up to two layers, collecting the known DMRS symbols of two adjacent subcarriers of both slots in the matrix

$$B_{SF} = \begin{bmatrix} a_{L,k}(0) & a_{L,k}(1) \\ a_{L,k+1}(0) & a_{L,k+1}(1) \\ a_{R,k}(0) & a_{R,k}(1) \\ a_{R,k+1}(0) & a_{R,k+1}(1) \end{bmatrix},$$

Eq. 57

the effective channel estimation problem Eq. 6.1 can be rewritten with Eq. 43 in matrix vector notation according to

$$\underbrace{\begin{bmatrix} r_{L,k}(p_R) \\ r_{L,k+1}(p_R) \\ r_{R,k}(p_R) \\ r_{R,k+1}(p_R) \end{bmatrix}}_{r_{SF,k}(p_R)} = B_{SF} \cdot \underbrace{\begin{bmatrix} \widetilde{H}_k(p_R,0) \\ \widetilde{H}_k(p_R,1) \end{bmatrix}}_{\widetilde{H}_k(p_R)} + \begin{bmatrix} n_{L,k} \\ n_{L,k+1} \\ n_{R,k} \\ n_{R,k+1} \end{bmatrix}$$

Eq. 58

with the column vectors $\tilde{H}_k(pR)$ and $r_{SF,k}(pR)$.

Whether a solution for the channel estimation problem exists, depends on the condition of the matrix $B_{SF}$.

The zero forcing channel estimate follows to

$$\hat{\tilde{H}}_k(p_R) = pinv(B_{SF}) \cdot r_{SF,k}(p_R)\,.$$

Special Case with one Layer

In case of only one layer, $a_{l,k}(1)=a_{l,k+1}(1)=0$ and $\tilde{H}_k(p_R,1)=0$ resulting in the SISO channel estimation problem.

Using the DMRS on the layer for channel estimation, the effective channel(s) from the one and only layer to the receive antenna(s) are estimated. So a reference and a measurement signal for the one and only layer can be generated.

Slot wise estimation

To perform the estimation per slot independently, in case of up to two layers, collecting the known DMRS symbols of three adjacent subcarriers and the IQ Offset interference function $C_k$ in the matrix

$$B_{IQ} = \begin{bmatrix} a_{l,k}(0) & a_{l,k}(1) & C_k \\ a_{l,k+1}(0) & a_{l,k+1}(1) & C_{k+1} \\ a_{l,k+2}(0) & a_{l,k+2}(1) & C_{k+2} \end{bmatrix},$$

Eq. 59

the effective channel estimation problem Eq. 47 can be rewritten with Eq. 52 in matrix vector notation according to

$$\underbrace{\begin{bmatrix} r_{l,k}(p_R) \\ r_{l,k+1}(p_R) \\ r_{l,k+2}(p_R) \end{bmatrix}}_{r_{l,k}(p_R)} = B_{IQ} \cdot \underbrace{\begin{bmatrix} \tilde{H}_k(p_R,0) \\ \tilde{H}_k(p_R,1) \\ b(p_R) \end{bmatrix}}_{x_k(p_R)} + \begin{bmatrix} n_{l,k} \\ n_{l,k+1} \\ n_{l,k+2} \end{bmatrix}$$

Eq. 60

with the column vectors $x_k(p_R)$ and $r_{l,k}(p_R)$.

Whether a solution for the channel estimation problem exists, depends on the condition of the matrix $B_{IQ}$.

The zero forcing IQ Offset and channel estimate follows to

$$x_k(p_R) = B_{IQ}^{-1} \cdot r_{l,k}(p_R).$$

Subframe wise estimation

To perform a subframe wise estimation, in case of up to two layers, collecting the known DMRS symbols of three adjacent subcarriers of both slots and the IQ Offset interference function $C_k$ in the matrix

$$B_{IQ,SF} = \begin{bmatrix} a_{L,k}(0) & a_{L,k}(1) & C_k \\ a_{L,k+1}(0) & a_{L,k+1}(1) & C_{k+1} \\ a_{L,k+2}(0) & a_{L,k+2}(1) & C_{k+2} \\ a_{R,k}(0) & a_{R,k}(1) & C_k \\ a_{R,k+1}(0) & a_{R,k+1}(1) & C_{k+1} \\ a_{R,k+2}(0) & a_{R,k+2}(1) & C_{k+2} \end{bmatrix},$$

Eq. 61

the effective channel estimation problem Eq. 47 can be rewritten with Eq. 52 in matrix vector notation according to

$$
\underbrace{\begin{bmatrix} r_{L,k}(p_R) \\ r_{L,k+1}(p_R) \\ r_{L,k+2}(p_R) \\ r_{R,k}(p_R) \\ r_{R,k+1}(p_R) \\ r_{R,k+2}(p_R) \end{bmatrix}}_{r_{SF,k}(p_R)} = B_{IQ,SF} \cdot \underbrace{\begin{bmatrix} \tilde{H}_k(p_R,0) \\ \tilde{H}_k(p_R,1) \\ b(p_R) \end{bmatrix}}_{x_k(p_R)} + \begin{bmatrix} n_{L,k} \\ n_{L,k+1} \\ n_{L,k+2} \\ n_{R,k} \\ n_{R,k+1} \\ n_{R,k+2} \end{bmatrix}
$$

Eq. 62

with the column vectors $x_k(p_R)$ and $r_{SF,k}(p_R)$.

Whether a solution for the channel estimation problem exists, depends on the condition of the matrix $B_{IQ,SF}$.

The zero forcing IQ Offset and channel estimate follows to

$$
x_k(p_R) = pinv(B_{IQ,SF}) \cdot r_{SF,k}(p_R)
$$

Slot wise estimation

To perform the estimation per slot independently, in case of up to four layers, collecting the known DMRS symbols of four adjacent subcarriers in the matrix

$$
C = \begin{bmatrix} a_{l,k}(0) & a_{l,k}(1) & a_{l,k}(2) & a_{l,k}(3) \\ a_{l,k+1}(0) & a_{l,k+1}(1) & a_{l,k+1}(2) & a_{l,k+1}(3) \\ a_{l,k+2}(0) & a_{l,k+2}(1) & a_{l,k+2}(2) & a_{l,k+2}(3) \\ a_{l,k+3}(0) & a_{l,k+3}(1) & a_{l,k+3}(2) & a_{l,k+3}(3) \end{bmatrix},
$$

Eq. 63

the effective channel estimation problem Eq. 47 can be rewritten with Eq. 51 in matrix vector notation according to

$$
\underbrace{\begin{bmatrix} r_{l,k}(p_R) \\ r_{l,k+1}(p_R) \\ r_{l,k+2}(p_R) \\ r_{l,k+3}(p_R) \end{bmatrix}}_{r_{l,k}(p_R)} = C \cdot \underbrace{\begin{bmatrix} \tilde{H}_k(p_R,0) \\ \tilde{H}_k(p_R,1) \\ \tilde{H}_k(p_R,2) \\ \tilde{H}_k(p_R,3) \end{bmatrix}}_{\tilde{H}_k(p_R)} + \begin{bmatrix} n_{l,k} \\ n_{l,k+1} \\ n_{l,k+2} \\ n_{l,k+3} \end{bmatrix}
$$

Eq. 64

with the column vectors $\tilde{H}_k(pR)$ and $r_{l,k}(p_R)$.

Whether a solution for the channel estimation problem exists, depends on the condition of the matrix $C$.

The zero forcing channel estimate follows to

$$\hat{\tilde{H}}_k(p_R) = C^{-1} \cdot r_{l,k}(p_R) \; .$$

Subframe wise estimation

To perform a subframe wise estimation, in case of up to four layers, collecting the known DMRS symbols of four adjacent subcarriers of both slots in the matrix

$$C_{SF} = \begin{bmatrix} C_L \\ C_R \end{bmatrix} ,$$

<div align="right">Eq. 65</div>

the effective channel estimation problem Eq. 47 can be rewritten with Eq. 51 in matrix vector notation according to

$$\underbrace{\begin{bmatrix} r_{L,k}(p_R) \\ r_{L,k+1}(p_R) \\ r_{L,k+2}(p_R) \\ r_{L,k+3}(p_R) \\ r_{R,k}(p_R) \\ r_{R,k+1}(p_R) \\ r_{R,k+2}(p_R) \\ r_{R,k+3}(p_R) \end{bmatrix}}_{r_{SF,k}(p_R)} = C_{SF} \cdot \underbrace{\begin{bmatrix} \tilde{H}_k(p_R,0) \\ \tilde{H}_k(p_R,1) \\ \tilde{H}_k(p_R,2) \\ \tilde{H}_k(p_R,3) \end{bmatrix}}_{\tilde{H}_k(p_R)} + \begin{bmatrix} n_{L,k} \\ n_{L,k+1} \\ n_{L,k+2} \\ n_{L,k+3} \\ n_{R,k} \\ n_{R,k+1} \\ n_{R,k+2} \\ n_{R,k+3} \end{bmatrix}$$

<div align="right">Eq. 66</div>

with the column vectors $\tilde{H}_k(p_R)$ and $r_{SF,k}(p_R)$.
Whether a solution for the channel estimation problem exists, depends on the condition of the matrix $C_{SF}$.
The zero forcing channel estimate follows to

$$\hat{\tilde{H}}_k(p_R) = pinv(C_{SF}) \cdot r_{SF,k}(p_R) \; .$$

Special Case with three Layers

In case of three layers, $a_{l,k}(3)=0 \forall k$ and $\tilde{H}_k(p_R,3)=0$ the matrix $C$ has only three rows and columns resulting in one dimension less for the estimation problem. The effective MISO channels can be estimated.

Slot wise estimation

To perform the estimation per slot independently, in case of up to four layers, collecting the known DMRS symbols of five adjacent subcarriers and the IQ Offset interference function $C_k$ in the matrix

$$C_{IQ} = \begin{bmatrix} a_{l,k}(0) & a_{l,k}(1) & a_{l,k}(2) & a_{l,k}(3) & C_k \\ a_{l,k+1}(0) & a_{l,k+1}(1) & a_{l,k+1}(2) & a_{l,k+1}(3) & C_{k+1} \\ a_{l,k+2}(0) & a_{l,k+2}(1) & a_{l,k+2}(2) & a_{l,k+2}(3) & C_{k+2} \\ a_{l,k+3}(0) & a_{l,k+3}(1) & a_{l,k+3}(2) & a_{l,k+3}(3) & C_{k+3} \\ a_{l,k+4}(0) & a_{l,k+4}(1) & a_{l,k+4}(2) & a_{l,k+4}(3) & C_{k+4} \end{bmatrix},$$

$$\text{Eq. } 67$$

the effective channel estimation problem Eq. 47 can be rewritten with Eq. 53 in matrix vector notation according to

$$\underbrace{\begin{bmatrix} r_{l,k}(p_R) \\ r_{l,k+1}(p_R) \\ r_{l,k+2}(p_R) \\ r_{l,k+3}(p_R) \\ r_{l,k+4}(p_R) \end{bmatrix}}_{r_{l,k}(p_R)} = C_{IQ} \cdot \underbrace{\begin{bmatrix} \tilde{H}_k(p_R,0) \\ \tilde{H}_k(p_R,1) \\ \tilde{H}_k(p_R,2) \\ \tilde{H}_k(p_R,3) \\ b(p_R) \end{bmatrix}}_{x_k(p_R)} + \begin{bmatrix} n_{l,k} \\ n_{l,k+1} \\ n_{l,k+2} \\ n_{l,k+3} \\ n_{l,k+4} \end{bmatrix}$$

$$\text{Eq. } 68$$

with the column vectors $x_k(p_R)$ and $r_{l,k}(p_R)$.

Whether a solution for the channel estimation problem exists, depends on the condition of the matrix $C_{IQ}$.

The zero forcing channel estimate follows to

$$x_k(p_R) = C_{IQ}^{-1} \cdot r_{l,k}(p_R).$$

Subframe wise estimation

To perform a subframe wise estimation, in case of up to four layers, collecting the known DMRS symbols of five adjacent subcarriers of both slots and the IQ Offset interference function $C_k$ in the matrix

$$C_{IQ,SF} = \begin{bmatrix} C_{IQ,L} \\ C_{IQ,R} \end{bmatrix},$$

$$\text{Eq. } 69$$

the effective channel estimation problem Eq. 47 can be rewritten with Eq. 53 in matrix vector notation according to

$$\underbrace{\begin{bmatrix} r_{L,k}(p_R) \\ r_{L,k+1}(p_R) \\ r_{L,k+2}(p_R) \\ r_{L,k+3}(p_R) \\ r_{L,k+4}(p_R) \\ r_{R,k}(p_R) \\ r_{R,k+1}(p_R) \\ r_{R,k+2}(p_R) \\ r_{R,k+3}(p_R) \\ r_{R,k+4}(p_R) \end{bmatrix}}_{r_{SF,k}(p_R)} = C_{IQ,SF} \cdot \underbrace{\begin{bmatrix} \widetilde{H}_k(p_R,0) \\ \widetilde{H}_k(p_R,1) \\ \widetilde{H}_k(p_R,2) \\ \widetilde{H}_k(p_R,3) \\ b(p_R) \end{bmatrix}}_{x_k(p_R)} + \begin{bmatrix} n_{L,k} \\ n_{L,k+1} \\ n_{L,k+2} \\ n_{L,k+3} \\ n_{L,k+4} \\ n_{R,k} \\ n_{R,k+1} \\ n_{R,k+2} \\ n_{R,k+3} \\ n_{R,k+4} \end{bmatrix}$$

Eq. 70

with the column vectors $x_k(p_R)$ and $r_{SF,k}(p_R)$.

Whether a solution for the channel estimation problem exists, depends on the condition of the matrix $C_{IQ,SF}$.

The zero forcing channel estimate follows to

$$x_k(p_R) = pinv(C_{IQ,SF}) \cdot r_{SF,k}(p_R) .$$

This is the SISO case.

The physical channel estimation problem Eq. 48 can be rewritten with Eq. 43 in matrix vector notation according to

$$\underbrace{\begin{bmatrix} r_{l,k}(p_R) \\ r_{l,k+1}(p_R) \end{bmatrix}}_{r_{l,k}(p_R)} = B \cdot W^T \cdot \underbrace{\begin{bmatrix} H_k(p_R,0) \\ H_k(p_R,1) \end{bmatrix}}_{H_k(p_R)} + \begin{bmatrix} n_{l,k} \\ n_{l,k+1} \end{bmatrix}$$

Eq. 71

with the standard conform precoding matrix

$$W = \begin{bmatrix} W(0,0) & W(0,1) \\ W(1,0) & W(1,1) \end{bmatrix},$$

Eq. 72

and the column vectors $\widetilde{H}_k(pR)$ and $\widetilde{r}_{l,k}(p_R)$ and $(\cdot)^T$ denoting the transpose operation.

Whether a solution for the channel estimation problem exists, depends on the condition of the matrix

$$B \cdot W^T = \begin{bmatrix} a_{l,k}(0) & a_{l,k+1}(1) \\ a_{l,k}(0) & a_{l,k+1}(1) \end{bmatrix} \cdot \begin{bmatrix} W(0,0) & W(1,0) \\ W(0,1) & W(1,1) \end{bmatrix}.$$

Eq. 73

In case of two transmit antennas and two layers, the precoding matrix is an identity matrix according to the standard. So whether a solution for the physical channel estimation problem exists, depends only on the condition of the matrix $B$. That is the same as for effective MISO channel estimation.

The zero forcing channel estimate follows to

$$\hat{H}_k(p_R) = \left( B \cdot W^T \right)^{-1} \cdot r_{l,k}(p_R).$$

Eq. 74

To get a measurement signal for the transmit antennas and for MISO Time Alignment Measurement in the special Case with one layer, the physical channels from the transmit antennas to the receive antenna(s) are required.

In case of only one layer $a_{l,k}(1)=a_{l,k+1}(1)=0$ and $W(0,1)=W(1,1)=0$ The matrix $B \cdot W^T$ follows to

$$B \cdot W^T = \begin{bmatrix} a_{l,k}(0) & 0 \\ a_{l,k+1}(0) & 0 \end{bmatrix} \cdot \begin{bmatrix} W(0,0) & W(1,0) \\ 0 & 0 \end{bmatrix} = \begin{bmatrix} a_{l,k}(0) \cdot W(0,0) & a_{l,k}(0) \cdot W(1,0) \\ a_{l,k+1}(0) \cdot W(0,0) & a_{l,k+1}(0) \cdot W(1,0) \end{bmatrix}.$$

Eq. 75

The determinant of the matrix is zero. Due to that the problem Eq. 71 is ill conditioned in case of one layer and the physical MISO channels cannot be estimated. Due to that a MISO Time Alignment Measurement cannot be performed in case of only one layer.

The physical channel estimation problem Eq. 47 can be rewritten with Eq. 51 in matrix vector notation according to

$$\underbrace{\begin{bmatrix} r_{l,k}(p_R) \\ r_{l,k+1}(p_R) \\ r_{l,k+2}(p_R) \\ r_{l,k+3}(p_R) \end{bmatrix}}_{r_{l,k}(p_R)} = C \cdot W^T \cdot \underbrace{\begin{bmatrix} H_k(p_R,0) \\ H_k(p_R,1) \\ H_k(p_R,2) \\ H_k(p_R,3) \end{bmatrix}}_{H_k(p_R)} + \begin{bmatrix} n_{l,k} \\ n_{l,k+1} \\ n_{l,k+2} \\ n_{l,k+3} \end{bmatrix}$$

Eq. 76

with the standard conform precoding matrix

$$W = \begin{bmatrix} W(0,0) & W(0,1) & W(0,2) & W(0,3) \\ W(1,0) & W(1,1) & W(1,2) & W(1,3) \\ W(2,0) & W(2,1) & W(2,2) & W(2,3) \\ W(3,0) & W(3,1) & W(3,2) & W(3,3) \end{bmatrix},$$

Eq. 77

and the column vectors $\tilde{H}_k(pR)$ and $\tilde{r}_{l,k}(p_R)$ and $(\cdot)^T$ denoting the transpose operation.

Whether a solution for the channel estimation problem exists, depends on the condition of the matrix

$$C \cdot W^T.$$

Eq. 78

In case of four transmit antennas and four layers, the precoding matrix is an identity matrix according to the standard. So whether a solution for the physical channel estimation problem exists, depends only on the condition of the matrix $C$. That is the same as for effective MISO channel estimation.

The zero forcing channel estimate follows to

$$\hat{H}_k(p_R) = \left(C \cdot W^T\right)^{-1} \cdot r_{l,k}(p_R).$$

Eq. 79

In case of three layers, always four antennas are used for the special case with less than four layers. In case of three layers, $a_{l,k}(4)=0 \forall k$, the determinant of the matrix $C \cdot W^T$ is zero. In case of one or two layers, the determinant of the matrix $C \cdot W^T$ is zero as well. Due to that the problem Eq. 76 is ill conditioned in case of less than four layers and the physical MISO channels cannot be estimated.

The effective MISO channel coefficients $\tilde{H}_k(p_R, \lambda)$ depend on the physical MISO channel coefficients $H_k(p_R, p_T)$ according to

$$\underbrace{\begin{bmatrix} \tilde{H}_k(p_R,0) \\ \tilde{H}_k(p_R,1) \end{bmatrix}}_{\tilde{H}_k(p_R)} = W^T \cdot \underbrace{\begin{bmatrix} H_k(p_R,0) \\ H_k(p_R,1) \end{bmatrix}}_{H_k(p_R)}$$

Eq. 80

for two transmit antennas and two layers.

For four transmit antennas and four layers, they depend according to

$$\begin{bmatrix} \widetilde{H}_k(p_R,0) \\ \widetilde{H}_k(p_R,1) \\ \widetilde{H}_k(p_R,2) \\ \widetilde{H}_k(p_R,3) \end{bmatrix} = W^T \cdot \begin{bmatrix} H_k(p_R,0) \\ H_k(p_R,1) \\ H_k(p_R,2) \\ H_k(p_R,3) \end{bmatrix} .$$

$$\underbrace{\phantom{\begin{bmatrix} \widetilde{H}_k(p_R,0) \end{bmatrix}}}_{\widetilde{H}_k(p_R)} \qquad \underbrace{\phantom{\begin{bmatrix} H_k(p_R,0) \end{bmatrix}}}_{H_k(p_R)}$$

Eq. 81

In Fig. 4 results of the iteration are shown. The x-axis shows the number of iterations. The y-axis shows the error vector magnitude. The different curves correspond to measuring signals of different signal-to-noise-ratio. One can clearly see that the process converges even for 60 dB after only a few iterations.

The invention is not limited to the examples and especially not to the communication standard LTE. The invention discussed above can be applied to many different communication standards. The characteristics of the exemplary embodiments can be used in any advantageous combination.

**Claims**

1. Measuring device for determining at least a first parameter and a second parameter of a measuring signal, comprising:

   - receiving means (10) for receiving the measuring signal,
   - processing means (11, 13),

   **characterized in that**
   the measuring signal comprises a first signal and a second signal,
   the processing means (11, 13) comprise:

   - parameter setting means (22) for setting an initial value of the first parameter,
   - iteration means (21) for iteratively determining the parameters based upon the set initial value of the first parameter.

2. Measuring device according to claim 1,
   **characterized in that**
   the iteration means (21) are set up for:

   - determining an intermediate value of the second parameter from the set first parameter in a first iteration,
   - determining an intermediate value of the first parameter based upon at least the determined intermediate value of the second parameter in the first iteration,
   - iteratively determining successive intermediate values of the parameters based upon previously determined intermediate values of the parameters, and
   - determining the parameters from determined last intermediate values of the parameters in a final iteration.

3. Measuring device according to claim 1 or 2,
   **characterized in that**
   the parameters are carrier frequency offset and/or sampling frequency offset and/or phase noise and/or IQ offset and/or channel estimation, and/or
   the first parameter is carrier frequency offset or sampling frequency offset or phase noise or IQ offset or channel estimation.

4. Measuring device according to any of the claims 1 to 3,
   **characterized in that**
   the measuring device (1) is set up for determining more than two, preferably 3, more preferably 4, even more preferably 5 parameters of the measuring signal iteratively.

**5.** Measuring device according to any of the claims 1 to 4,
**characterized in that**
the measuring device (1) is set up for determining carrier frequency offset and sampling frequency offset and phase noise and IQ offset and channel estimation iteratively.

**6.** Measuring device according to any of the claims 1 to 5,
**characterized in that**
the iteration means (21) are setup for determining the parameters by performing at least 5 iterations, advantageously at least 10 iterations, most advantageously at least 20 iterations.

**7.** Measuring device according to any of the claims 1 to 6,
**characterized in that**
the first signal and the second signal are individual antenna signals of a MIMO uplink of a device under test (2), and simultaneous non-identical pilot symbols are present within the first signal and the second signal.

**8.** Measuring system comprising a measuring device (1) according to any one of the claims 1 to 7 and coupling means (5) for creating the measuring signal by adding the first signal and the second signal.

**9.** Measuring method for determining at least a first parameter and a second parameter of a measuring signal, comprising:

- receiving the measuring signal,
- processing the received measuring signal,

**characterized in that**
the measuring signal comprises a first signal and a second signal,
the method further comprises:

- setting an initial value of the first parameter, and
- iteratively determining the parameters based upon the set initial value of the first parameter.

**10.** Measuring method according to claim 9,
**characterized in that**
the method comprises:

- determining an intermediate value of the second parameter from the set first parameter in a first iteration,
- determining an intermediate value of the first parameter based upon at least the determined intermediate value of second parameter in the first iteration,
- iteratively determining successive intermediate values of the parameters based upon previously determined intermediate values of the parameters, and
- determining the parameters from determined last intermediate values of the parameters in a final iteration.

**11.** Measuring method according to claim 9 or 10,
**characterized in that**
the parameters are carrier frequency offset and/or sampling frequency offset and/or phase noise and/or IQ offset and/or channel estimation, and/or
the first parameter is carrier frequency offset or sampling frequency offset or phase noise or IQ offset or channel estimation.

**12.** Measuring method according to any of the claims 9 to 11,
**characterized in that**
the method comprises determining more than two, preferably 3, more preferably 4, even more preferably 5 parameters of the measuring signal iteratively.

**13.** Measuring method according to any of the claims 9 to 12,
**characterized in that**
the method comprises determining carrier frequency offset and sampling frequency offset and phase noise and IQ offset and channel estimation iteratively.

**14.** Measuring method according to any of the claims 9 to 13,
**characterized in that**
the method comprises determining the parameters by performing at least 5 iterations, advantageously at least 10 iterations, most advantageously at least 20 iterations.

**15.** Measuring method according to any of the claims 9 to 14,
**characterized in that**
wherein the first signal and the second signal are individual antenna signals of a MIMO uplink of a device under test (2), and
wherein simultaneous non-identical pilot symbols are present within the first signal and the second signal.

**16.** Measuring method according to any of the claims 9 to 15,
**characterized in that**
the method comprises creating the measuring signal by adding the first signal and the second signal.

**17.** A computer program with program code means for performing all steps according to any of the claims 9 to 16 if the program is executed on a computer or a digital signal processor.

**18.** A computer program product having a computer readable medium with stored program code means for performing all steps according to any of the claims 9 to 16 if the program is executed on a computer or a digital signal processor.

Fig. 1

Fig. 2

Add a first signal and a second signal
Resulting in a measuring signal — 100

Receive measuring signal — 101

Set a first parameter — 102

Determine a second parameter
based upon previously set
or determiend parameters — 103

Determine further parameters
based upon previously set
or determined parameters — 104

Determine the frist parameter based
upon previously determined parameters — 105

Output the determined parameters — 106

# Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011077390 A1
- WO 2008116534 A1